# EUROPEAN PATENT APPLICATION

(11) **EP 0 814 407 A1**
(43) Date of publication of application: **29.12.1997**
(21) Application number: 96109841.5
(22) Date of filing: 19.06.1996
(51) Int. Cl.: G06F 12/14

(54) **Method and control circuit for protecting an input of an electronic circuit**

(71) Applicant: MOTOROLA, INC., Schaumburg, IL 60196 (US)
(72) Inventor: Pardo, Ilan, Ramat Hasharon 47246 (IL); Berger, Ricardo, Raanana 43380 (IL); Wertheim, Elon, Ramat Hasharon 47217 (IL); Volpert, Yehuda, Petah-Tikva 49600 (IL)
(74) Representative: Richardt, Markus Albert

(57) **Abstract**

An electronic system has an electronic device which is protected against unintended input operations which otherwise can be caused by transient and/or floating conditions in the rest of the electronic system during power off. The input protection is accomplished by assigning a predefined key or a plurality of predefined keys to the input protected electronic device of the electronic system. Only if prior to an input operation the correct key is written to control circuit of the protected device an input operation to the protected device is enabled.

## Description

### Background of the Invention

This invention relates to the protection of an input of an electronic circuit against an unintended input operation. More specifically, it relates to the input protection of a portable electronic apparatus such as a portable computer or a portable cellular telephone.

### Description of the prior art

When an electronic system such as a computer or telecommunication system is shut down it is sometimes desirable to maintain a certain defined status of the system. For example, if a personal computer is disconnected from the main power supply a certain amount of status data still is needed for the internal clock of the personal computer. The internal clock of the computer as well as the registers which are associated to the internal clock are powered by a small separate battery during the disconnection of the personal computer from the main power supply. Thereby a small portion of the entire circuitry of the personal computer is still kept active and is still operating while the computer is switched off and/or is disconnected from the main power supply. A problem occurs when the personal computer is switched off or is disconnected from the main power supply: After the switching is done transient signals are applied to the circuitry of the personal computer which is still active due to the power supply by the auxiliary separate battery. When the rest of the circuitry is powered down this results in unpredictable transient signals at the inputs of this part of the circuitry which is remaining active. As a consequence of these transient and/or floating conditions unintended input operations might take place to the active electronic circuit.

A similar problem is also encountered when the battery in a battery-operated electronic system becomes discharged while the system is in use. To replace the battery in prior art systems a number of steps have ordinarily to be taken in order to prepare the system for the replacement of the battery. This sequence of steps is described in the US Patent 5,309,031.

This prior art procedure for preparing the replacement can take a considerable amount of time.

To overcome these disadvantages, prior art lap-top computers have made use of a special memory for storing the contents of the main memory and also that of the contents of the internal registers of the micro processor component of the computer. This special memory is a very low-powered, expensive static-type memory which is limited, by cost, to a relatively small memory capacity. As battery-powered computers have become more complex, the memory size has increased so that static memory of the corresponding size would be prohibitive in cost and would be physically too large.

Another prior art system is involved with writing the contents of the registers and the main memory into a disc memory before the computer is shut down for battery replacement. However, the power requirement in that type of system is high and, furthermore, all of the registers in the current micro processor structures are not so critical of being read out and preserved. Therefore, the exact states of a micro processor can not be saved before turning the power off for battery replacement.

As a consequence the above described prior art techniques to maintain data integrity when the main power supply is disconnected are not satisfactory.

It is therefore an object of the present invention to provide an improved method and control circuit for protecting an input of an electronic circuit against an unintended input operation. Furthermore, it is an object of the present invention to provide for an electronic system and for a portable electronic apparatus featuring improved protection against unintended input operations.

### Summary of the Invention

The object of the invention is solved basically by applying the features laid down in the independent claims.

It is advantageous to use the invention in an environment comprising a plurality of electronic circuits where one or more of the electronic circuits have to remain active when the rest of the circuits is disconnected from the power supply. The circuits can be implemented on the same chip in an environment where parts of the chip can be deactivated or the circuits can also be distributed on different integrated circuit chips. When the electronic system which incorporates the plurality of electronic circuits is disconnected from the main power supply unintended input operations to the protected portion of the electronic circuitry is prevented. In particular, transient or floating signals which are applied to the protected portion of the electronic circuitry of the system do not lead to unintended input operations when the system is disconnected from the main power supply. Thereby data integrity is maintained and any information which is to be stored in the protected portion of the electronic circuitry during power off is preserved.

The same applies when the electronic system is reconnected to the main power supply after a while, for example by reconnecting the recharged batteries. Then normal operation of the electronic system can restart immediately without a need to reenter or correct the data of the protected portion of the electronic circuitry. Therefore it is also possible to store data which are needed for booting the electronic system in this part of the circuitry.

When the electronic system is reconnected this again results in transient and floating signals. The invention is particularly advantageous in that it allows to protect the input of an electronic circuitry not only against unintended inputs due to power down but also when the system is powered up. Then the same protection mechanism is applicable.

Furthermore the invention is advantageous in terms of the hardware expense required for its implementation. This makes the invention suitable for application in high volume consumer products such as cellular telephones and personal digital assistants.

In principal, any key can be selected for input protection. For example, if the key is 16 bit wide, the chances that these 16 bit are applied to the control circuit without intention by the randomly floating signal lines and that the corresponding control signals by chance do also have the required values at the same time is astronomically small and can be neglected in most cases.

If the data security has to be further enhanced a private key could be used for individual portions of the electronic circuit to be input protected.

### Brief Description of the Drawing

FIG. 1 is a block diagram of a first embodiment of a control circuit and electronic system according to the invention;
FIG. 2 is a flow diagram of a method according to the invention;
FIG. 3 is a block diagram of a second embodiment;
FIG. 4 is a more detailed block diagram of the second embodiment;
FIG. 5 is a block diagram of a third embodiment; and
FIG. 6 is a portable electronic apparatus of the invention.

### Detailed Description of the invention

This invention enables the disconnection and reconnection of the main power supply of an electronic system without putting the data integrity and correctness of operation of these parts of the electronic system at risk which remain active when the rest of the system is switched off. The following detailed description illustrates how this is accomplished.

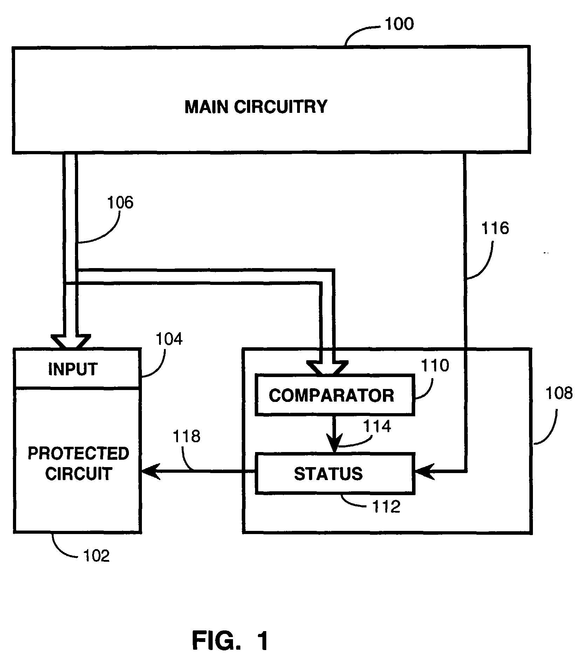

FIG. 1 illustrates an electronic system having main circuitry 100 and the protected circuit 102. The protected circuit 102 has an input 104 which is coupled to a bus 106 for input of data from the main circuitry 100. Control circuit 108 is also coupled to the bus 106. The control circuit 108 has a comparator 110 and a status register 112. The comparator 110 is connected to the bus 106 and is also connected via signal line 114 to the status register 112. The status register 112 is also connected to the main circuitry 100 via the control line 116. The status information is applied to the protected circuit 102 via the status line 118 which connects the status register 112 to the protected circuit 102.

The comparator 110 compares data which are outputted by the main circuitry 100 on the bus 106 to a key which is to protect the circuit 102 against an unintended input. If there is a match between the data which is on the bus and the key, the comparator 110 asserts a signal and raises signal line 114 which indicates the matching condition to the status register 112. Only if the status register 112 contains a logical 1, status line 118 is high to enable the input 104 of the protected circuit 102. The default status bit of the status register 112 is logical 0 also during normal operation of the electronic system when the main power supply is connected and the batteries are not empty.

When the status bit of the status register 112 is logical 0 the input 104 is disabled and all signals which are present on the bus 106 are ignored. Hence as regards the input of data the protected circuit 102 is completely isolated from the rest of the electronic system as long as the status bit is logical 0 in the status register 112. If the main circuitry 100 wants to access the protected circuit 102 for an input operation the status bit has to be changed to logical 1. This is accomplished as follows:

The main circuitry 100 outputs data on the bus 106 which is representative of the predefined key which protects the circuit 102. In parallel the control line 116 is raised to indicate to the control circuit 108 that the data which is present on the bus 106 is not normal data for input to the protected circuit 102, but key data to be compared to the predefined key in the comparator 110. If the key data and the predefined key match, the comparator 110 raises the signal line 114 to logical 1. This information is latched in the status register 112 since at the same time the control line 116 is high. Thereby the old status bit which was logical 0 is exchanged against a new status bit which is logical 1.

The status bit logical 1 indicates that the input 104 is enabled. The status information again is transmitted via the status line 118 to the protected circuit 102. In response to this information the input 104 is enabled. In parallel to the enabling of the input 104 the control line 116 is dropped again. This indicates to the control circuit 108 that subsequent data which will be present on the data bus 106 will not be key data but normal data for input into the protected circuit 102. Due to the dropping of the control line 116 the comparison of the normal data in the comparator 110 will not result in any change of the status bit which is latched in the status register 112. Any resetting of the status register 112 is disabled as long as the control line 116 is dropped.

After the main circuitry 100 finished the input operation into the protected circuit 102 the protected circuit 102 has to be locked again. This is accomplished in the following way:

The main circuitry 100 outputs "wrong" key data on the bus 106 and raises the control line 116 in parallel. This time the key data do not match the predefined key so that the comparator 110 will drop signal line 114 which corresponds to the information logical 0. As the control line 116 is high this information is latched in the status register 112 or with other words the status register 112 is reset to 0. As a result the status information is logical 0 which indicates that the input 104 is disabled. This information is transmitted via the status line 118 to the protected circuit 102 so that in fact the input 104 is disabled.

After the resetting of the status register 112 the control line 116 is dropped again to indicate to the control circuit 108 that subsequent data which are outputted by the main circuitry 100 onto the bus 106 are no key data but normal data for other parts of the electronic system not shown in the drawing. As a consequence of the above the protected circuit 102 is completely isolated from the rest of the electronic system except for small periods of time which are required for inputting of data into the circuit 102.

When the main power supply of the main circuitry 100 fails, for example due to battery failure or due to disconnecting the electronic system from the power supply, this means that there is a very high likelihood that at this arbitrary point of time which is not predictable the protected circuit 102 is isolated from the rest of the electronic system because the status bit is logical 0. When the main circuitry 100 is disconnected from the power supply this will result in unpredictable signal characteristics on the bus 106 due to the transient physical processes, such as the discharging of parasitic capacitance's and other noise sources. The resulting random electronic signals which are present on the bus 106 are not interpreted by the input 104 as valid data but are ignored due to the status bit which is logical 0. The chances that correct key data will be present on the data bus 106 just by the random fluctuations of the signals and that at the same time the floating control line 116 will be high to change the status bit to logical 1 are extremely low so that they can be neglected for most applications.

The protection of the input 104 of the circuit 102 is also effective when the main circuitry 100 is reconnected to the main power supply again. This will result in other transients on the data bus 106 and the control line 116 which are also not interpreted by the input 104 as valid data since the input 104 is disabled by means of the status bit which is still logical 0. When the main circuitry 100 becomes fully operational again, it can unlock the protected circuit 102 in the above described way by outputting correct key data and raising in parallel the control line 116 to change the status bit in the status register 112 so that the input 104 is enabled.

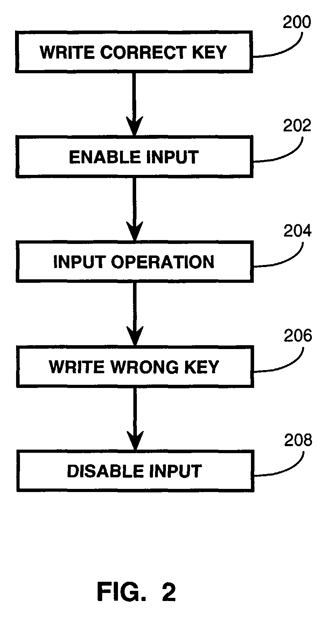

This method of the invention is also shown in the flow chart of FIG. 2. In step 200 the main circuitry 100 outputs the correct key data on the bus 106 to transmit the correct key which matches the predefined key to the comparator 110 of the control circuit 108. In response to this transmission of the correct key in step 202 an input operation to the electronic device, which in this case is the protected circuit 102, is enabled by latching the status bit logical 1 in the status register 112. This also requires that the control line 116 be high for latching the information logical 1 in the status register 112.

In the subsequent step 204 an input operation is carried out by the main circuitry 100 via the bus 106 to the input 104 of the protected circuit 102. After the input operation or after a plurality of input operations the protected circuit 102 is to be isolated again from the rest of the electronic system. Therefore the main circuitry 100 writes a wrong key to the control circuit 108 via the bus 106 in step 206 and raises the control line 116. As there is a mismatch between the key data on the bus 106 and the predefined key the status register is reset to 0 so that the input 104 is disabled in step 208.

As a consequence any floating or transient conditions at the input 104 do not lead to the input of random data into the protected circuit 102. Thereby the circuit 102 is effectively protected against unintended input operations, such as unintended input operations caused by a disruption of the main power supply.

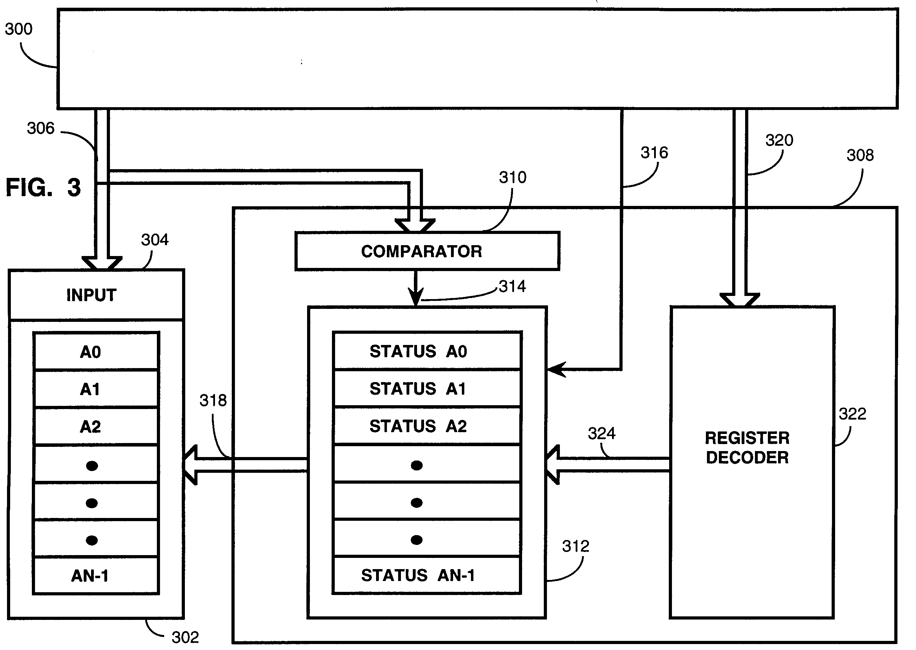

FIG. 3 shows a second preferred embodiment of the invention. Like reference numerals correspond to like elements in FIG. 1 and 3 having added 200 to the reference numerals of FIG. 1. The preferred embodiment of FIG. 3 differs from the embodiment shown in FIG. 1 in that the protected circuit 302 has a plurality of storage regions, such as registers or the like. The storage regions have the addresses A0 to An-1. Each of the storage regions A0 to An-1 has its own status register assigned thereto. The status register 312 comprises a plurality of status registers having the addresses A0 to An-1. For example, the status register A0 stores the status information for the storage region A0 in the protected circuit 302. The same applies analogously to the status registers A1 to An-1 and their corresponding storage regions A1 to An-1.

The n bits of status information which are stored in the storage registers 312 is transmitted via the status bus 318 to the protected circuit 302. If the main circuit 300 wants to access a particular storage region Ax, where 0≤x<n, the input operation to this particular storage region Ax has to be enabled. This is accomplished in a way similar to the method of FIG. 2:

The default values of all the status registers are logical 0 so that normally the protected circuit 302 is completely isolated from the rest of the electronic system as regards input operations into the protected circuit 302. To change the status bit which carries the enable status information for a specific storage region the main circuitry outputs key data on the bus 306 and raises the control line 316 to signal to the control circuit 308 that the data which is outputted is not normal data for input into the protected circuit 302 but key data to be compared in comparator 310. In addition, the main circuit 300 outputs the address Ax on the address bus 320 for input into the register decoder 322. The register decoder 322 selects the status register of the status registers 312 which has the address Ax. If the key data matches the predefined key, which is the same for all of the storage regions of the protected circuit 302, the signal line 314 is raised to output logical 1 to the status registers 312.

Via the select bus 324 which couples the register decoder 322 to the status registers 312 the status register Ax is selected for inputting and matching the new enable status information which is logical 1 for the storage region having the address Ax. Subsequently the control line 316 is dropped again and data are outputted from the main circuitry 300 on the bus 306 and inputted into the storage region having the address Ax of the circuit 302. To disable an input operation into that storage region again the control line 316 has to be raised and key data which does not match the predefined key is outputted on the bus 306 as well as the address Ax of the corresponding storage region. This results in a resetting of the status register having the address Ax so that any input operation to the storage region Ax is disabled again.

It is also possible to assign different addresses to the storage regions and the corresponding status registers as long as there is an unambiguous assignment of each status register to a specific one of the storage regions. This can be advantageous to distinguish between a write operation to a status register and write operation to a storage region.

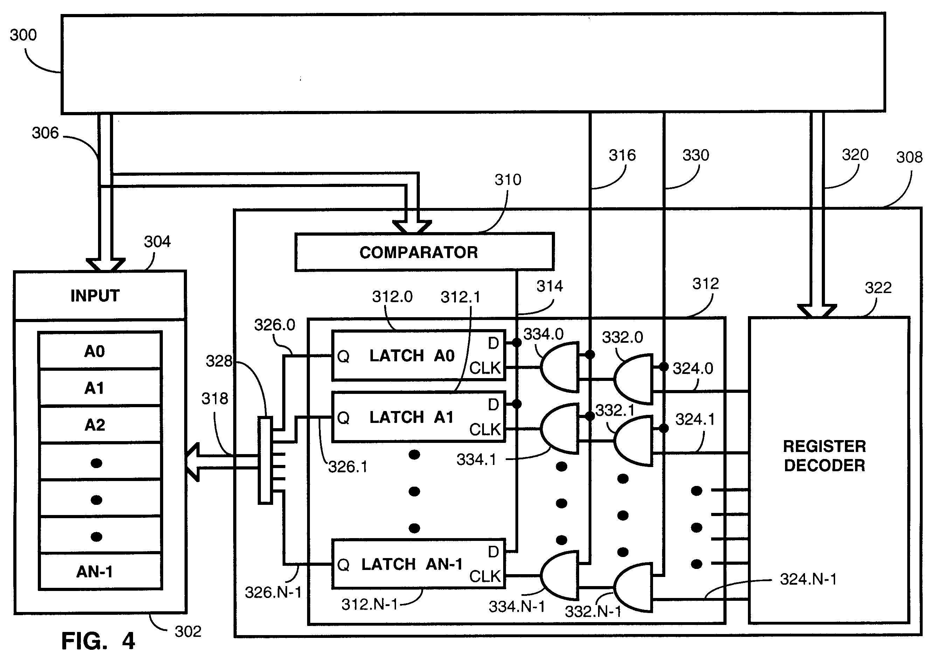

FIG. 4 shows a more detailed view of the preferred embodiment of FIG. 3. As it is shown in FIG. 4 the status registers 312 are realized by a number n of latches 312.0, 312.1 to 312.n-1. Each latch has an input D for the input of data and a clock input CLK for clocking the latch.

When there is a pulse at the input CLK of a latch then the data present at its input D is latched. The latched data is outputted at the output Q of a latch. All of the inputs D of the latches 312.0 to 312.n-1 are connected to the signal line 314 to receive status information from the comparator 310. All of the outputs Q of the latches 312.0 to 312.n-1 are connected via the output lines 326.0 to 326.n-1, respectively, to the status bus 318 via the status bus controller 328. For latching enable status information in one of the latches the control line 316 has to be raised like explained with respect to FIG. 3. In addition FIG. 4 also shows the write line 330 which serves to control the writing of the status information to the corresponding latches and also the input of data into the protected circuit 302. The connection of the write line 330 to the protected circuit 302 is not shown in FIG. 4.

The write line 330 is connected to one input of all the end gates 332.0 to 332.n-1 of the status registers 312. The other input of each of the end gates 332.0 to 332.n-1 is connected to one of the lines 324.0 to 324.n-1, respectively, of the select bus 324. The output of each of the end gates 332.0 to 332.n-1 is connected to a respective input of each of the end gates 334.0 to 334.n-1 which are also comprised in the status registers 312.

The other input of each of the end gates 334.0 to 334.n-1 is connected to the control line 316. The output of each of the end gates of 334.0 to 334.n-1 is connected to the corresponding input CLK of its corresponding latch 312.0 to 312.n-1, respectively. As a consequence data is only latched in one of the latches 312.x having the address Ax if the corresponding select line 324.x of the select bus 324 is raised, the write signal on the write line 330 is asserted and the control line 316 is raised. If the main circuitry 300 wants to alter the status information in the latch 312.x having the address Ax assigned thereto this address Ax is outputted via the address bus 320 to the register decoder 322. The register decoder 322 decodes the address Ax to select the corresponding latch 312.x. This is done by raising the corresponding select line 324.x so that only the latch 312.x can receive a pulse at its input CLK.

Hence, the information outputted by the comparator 310 on the signal line 314 is only latched in the latch 312.x but not in the other latches. As a consequence only an input operation to the storage region Ax of the protected circuit 302 is enabled thereby.

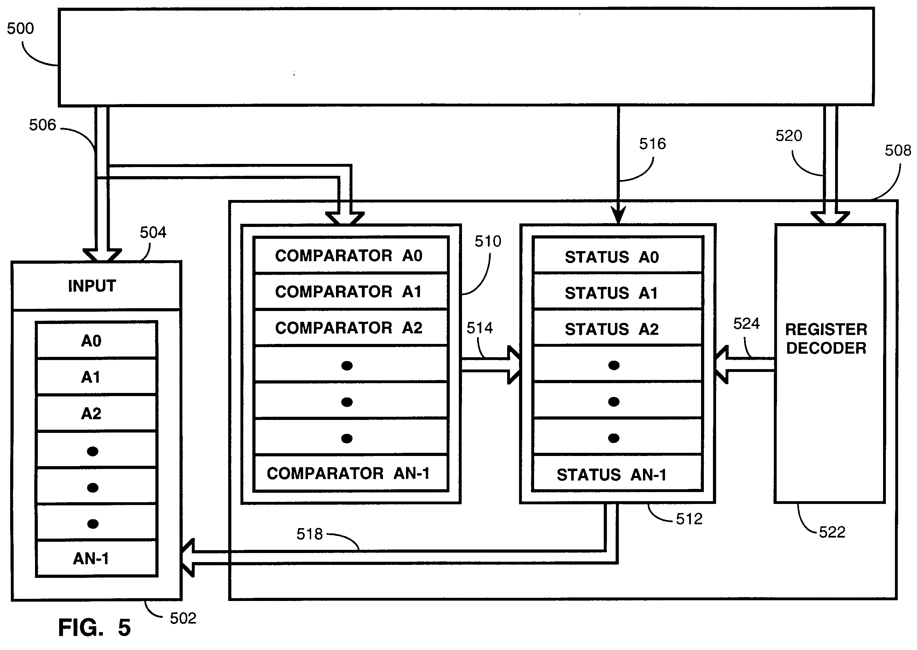

FIG. 5 shows a third preferred embodiment of the invention. Like reference numerals correspond to like elements of FIG. 3 and 5, having added 200 to the reference numerals of FIG 3. The preferred embodiment shown in FIG. 5 differs from the embodiment in FIG. 3 in that every storage region of the protected circuit 502 has its own predefined key.

As a consequence a number n of comparators 510 are required. Each of the n comparators 510 is assigned to a specific address A0 to An-1 corresponding to the addresses A0 to An-1 of the storage regions. If the main circuitry 500 wants to access the storage region Ax, it outputs key data which matches the predefined key of this storage region onto the bus 506. This key data is compared in all of the comparators 510 but only one of the comparators which is assigned to the address Ax issues a logical 1 in response to the comparison since in all of the other comparators there is a mismatch since the other predefined keys are different from the one of the storage region Ax. All of these data are transmitted via the signal bus 514 to the status registers 512.

Via the signal bus 514 each status register is logically connected to its corresponding comparator, for example the status register Ax to its corresponding comparator Ax. Since the main circuitry 500 wants to enable the storage region Ax for an input operation the address Ax is outputted on the address bus 520 and decoded in the register decoder 522. The decoded information is transmitted via the select bus 524 to the status registers 512 so that the input of the status information is only enabled into the status register Ax. As a consequence the status information coming from the comparator Ax which in this case is logical 1 is latched in the status register Ax so that the corresponding storage region Ax is enabled for an input operation.

The assignment of different predefined keys to different storage regions has the advantage of an enhanced protection of the protected circuit 502. If by chance due to floating signals on the bus a signal is present which corresponds to one of the predefined keys only one of the comparators indicates a match. If at the same time the corresponding control signals should be present on the control line 516 and the address bus 520 this would only result in the enabling of one of the storage regions. The other storage regions would not be affected thereby. Hence only one of the storage regions would loose the protection whereas the other storage regions would still be protected against unintended input operations. However, the likelihood of such a case is extremely low since not only the write key data have to be present on the bus 506 but also the corresponding control signals have to be applied at the same time just by chance due to transient and/or floating conditions.

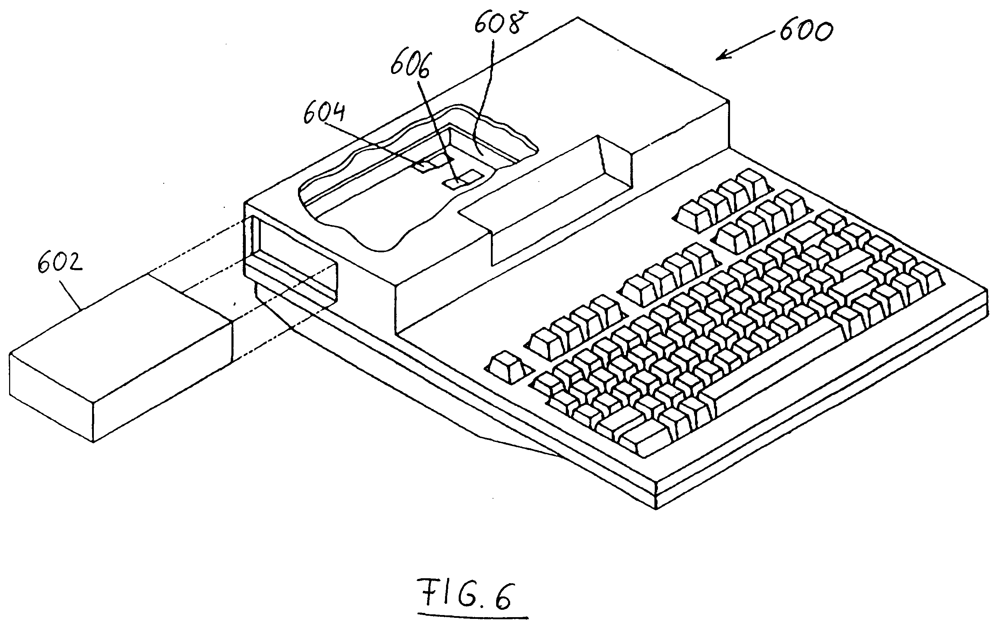

FIG. 6 shows a portable electronic apparatus which makes usage of the present invention. The portable electronic apparatus in this case is a lap-top computer which can be used as a personal digital assistant. The computer 600 has a high number of electronic circuits most of which are implemented in integrated circuit chips.

The computer 600 is powered by a main battery 602. In normal operation the main battery 602 is inserted into the cavity 608 in the computer 600 and connected via the electrical connectors 604 and 606 to the plurality of electronic circuits comprised in the computer 600. In addition the computer 600 has an auxiliary battery which is not shown in FIG. 6. The auxiliary battery serves to power a small part of the electronic circuits of the computer 600 when the main battery 602 is disconnected. The part of the electronic circuits which remains active in this case is comprised in a protected circuit which has an input protection like the protected circuits 102, 302 and 502 of FIG. 1, 3, 4 and 5.

When the main battery 602 is exhausted or defective it has to be disconnected from the connectors 604 and 606 for recharging or replacement. When the main battery 602 is pulled out of the cavity 608 this results in an abrupt disruption of the power supply of that part of the electronic circuits which does not have a connection to the auxiliary battery. Hence floating and transient signals are applied to the protected circuit being connected to the auxiliary battery. Since this part of the circuit is input protected, no unintended input operations can take place, so that data integrity is maintained. When the recharged or replaced battery 602 is reconnected to the computer 600 the normal operation of the computer 600 can be resumed without a need to reprogram the protected part of the circuits which remained active during the disconnection of the main battery 602.

Those skilled in the art may change circuits and components such as the control circuits 108, 308 and 508 which could readily be made of all solid state components, without departing from the spirit and scope of this invention which is limited only by the appended claims.

## Claims

1. A method for protecting an input of an electronic circuit against an unintended input operation, said method comprising the steps of
a) writing of a correct key which matches a predefined key to a control circuit of said electronic circuit;
b) enabling an input operation to said electronic circuit in response to said writing of said correct key;
c) writing of a wrong key which does not match said predefined key to said control circuit; and
d) disabling a subsequent input operation in response to said writing of said wrong key.

2. The method of claim 1 said electronic circuit comprising a plurality of storage regions each of which having its own address, said predefined key being the same for all said storage regions,
said method further comprising the step of writing said address of one of said storage regions to said control circuit to enable said input operation to said storage region.

3. The method of claim 1 said method further comprising the step of selecting said predefined key so that the likelihood of an unintended writing of said correct key to said control circuit due to a floating condition is minimized.

4. The method of claim 1 said control circuit comprising register means for storage of an enabling condition of said input of said electronic circuit, said method further comprising the step of setting said register means in response to said writing of said correct key, so that write enable status information is stored in said register means.

5. The method of claim 1 said electronic circuit comprising a plurality of storage regions each of which having its own address assigned thereto and each of said storage regions having a separate register means assigned thereto for storage of an enabling condition of said input of said electronic circuit to said storage region,
said method further comprising the step of setting one of said register means which is assigned to one of said storage regions having a particular address in response to said writing of said correct key and to applying of said particular address to an address decoder of said control circuit.

6. The method of claim 2 each storage region having its own predefined key assigned thereto and said method comprising the step of selectively enabling an input operation to said electronic circuit in response to said writing of said correct key only to said storage region to which the correct key is assigned.

7. A control circuit for an electronic circuit for protecting an input of said electronic circuit against an unintended input operation by a predefined key,
said control circuit comprising
a) means for comparing data to said predefined key in response to a write operation of said data to said control circuit;
b) register means for storage of an enabling condition of said input of said electronic circuit;
c) means for setting said register means in response to a write operation of said data being representative of said predefined key, so that said enabling condition is stored in said register means; and
d) means for resetting said register means in response to a subsequent write operation of data which is not representative of said predefined key to said control circuit.

8. The control circuit according to claim 7, said electronic circuit comprising a plurality of storage regions each of which having its own address, said predefined key being the same for all said storage region,
said circuit further comprising register means, each of said storage regions having assigned thereto a separate register means for storage of an enabling condition of said input of said electronic circuit to said specific storage region.

9. The control circuit according to claim 8, each of said storage regions having a different predefined key assigned thereto, said comparator means being adapted to compare said data to one of said predefined keys depending on which one of the storage regions the write operation belongs to.

10. An electronic system comprising
a) an electronic circuit having an input to be protected against an unintended input operation;
b) a control circuit coupled to a control input of said electronic circuit;
said control circuit comprising
a) means for comparing data to said predefined key in response to a write operation of said data to said control circuit;
b) register means for storage of an enabling condition of said input of said electronic circuit;
c) means for setting said register means in response to a write operation of said data being representative of said predefined key, so that said enabling condition is stored in said register means; and
d) means for resetting said register means in response to a subsequent write operation of data which is not representative of said predefined key to said control circuit.

11. A portable electronic apparatus comprising
a plurality of electronic circuits, one of which remaining active when the main power supply of said portable electronic apparatus is not available, said one electronic circuit being coupled to a control circuit according to claim 7 for protection against unintended inputs.
